# EUROPEAN PATENT SPECIFICATION

(11) **EP 3 210 747 B1**
(45) Date of publication and mention of the grant of the patent: **18.07.2018**
(21) Application number: 17157944.4
(22) Date of filing: 24.02.2017
(51) Int. Cl.: B29C 45/40

(54) **INJECTION MOLDING MACHINE**
SPRITZGIESSMASCHINE
MACHINE DE MOULAGE PAR INJECTION

(30) Priority: 29.02.2016 JP 2016037977
(43) Date of publication of application: 30.08.2017
(73) Proprietor: Sumitomo Heavy Industries, Ltd., Tokyo 141-6025 (JP)
(72) Inventor: ISHII, Tsutomu, Chiba-shi Chiba 263-0001 (JP)
(74) Representative: Louis Pöhlau Lohrentz

(56) References cited:
- JP-A- H06 166 067
- JP-A- 2000 218 673
- JP-A- 2013 184 443
- US-A1- 2011 256 258

## Description

### BACKGROUND OF THE INVENTION

### Field of the Invention

A certain embodiment of the present invention relates to an injection molding machine.

### Description of Related Art

United States Patent Application US 2011/256258 A1 describes an injection molding device in which an ejector pole exerts thrust on an ejector plate which moves an ejector pin that pushes solidified plastic to drop off from a male mold, wherein the ejector pole and the ejector pin are arranged in line.

### SUMMARY OF THE INVENTION

The present invention has a main object to provide an injection molding machine in which at the time of pushing-out of a molding product, the collapse of the balance of a movable member which pushes an ejector rod from the rear is suppressed even if thrust and ejector pin are not be arranged in line.

In order to solve the above problem, according to an aspect of the present invention, there is provided an injection molding machine including: an ejector rod which advances a molding product pushing-out member which is disposed in a mold unit so as to be able to advance and retract, by pushing the molding product pushing-out member from the rear; a movable member which advances the ejector rod by pushing the ejector rod from the rear; and a reaction force applying member which applies a reaction force to the movable member at a different position from the ejector rod when viewed in a front-back direction, at the time of a forward movement of the movable member.

According to the aspect of the present invention, an injection molding machine is provided in which at the time of pushing-out of a molding product, the collapse of the balance of a movable member which pushes an ejector rod from the rear is suppressed.

### BRIEF DESCRIPTION OF THE DRAWINGS

Fig. 1 is a diagram showing the state at the time of mold clamping of an injection molding machine according to an embodiment.
Fig. 2 is a diagram showing a state where a cavity for primary molding has been filled with a molding material from a first injection unit in Fig. 1.
Fig. 3 is a diagram showing a state where a cavity for secondary molding has been filled with a molding material from a second injection unit in Fig. 2 after the rotation of a turntable in Fig. 2.

### DETAILED DESCRIPTION OF THE INVENTION

Hereinafter, a mode for carrying out the present invention will be described with reference to the drawings. In each of the drawings, the same configuration is denoted by the same reference numeral and a description thereof is omitted.

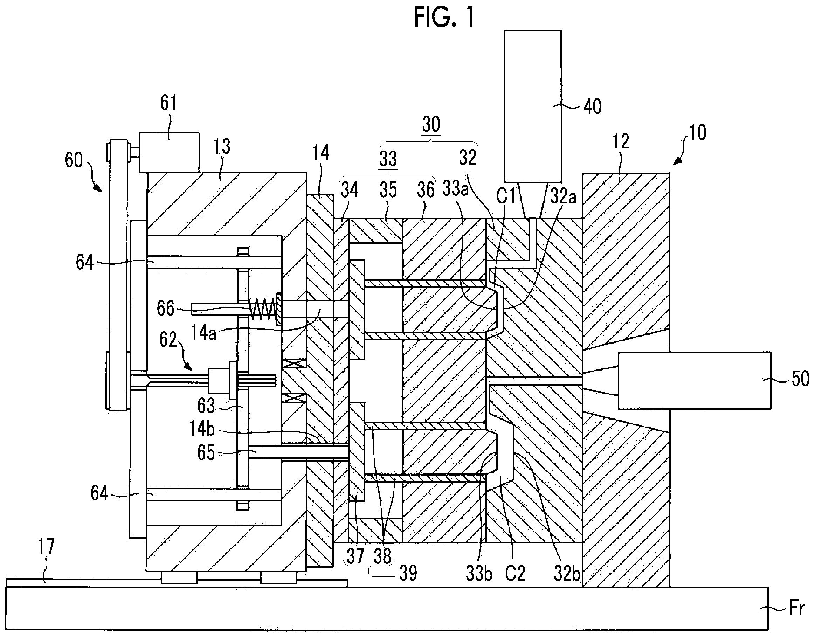

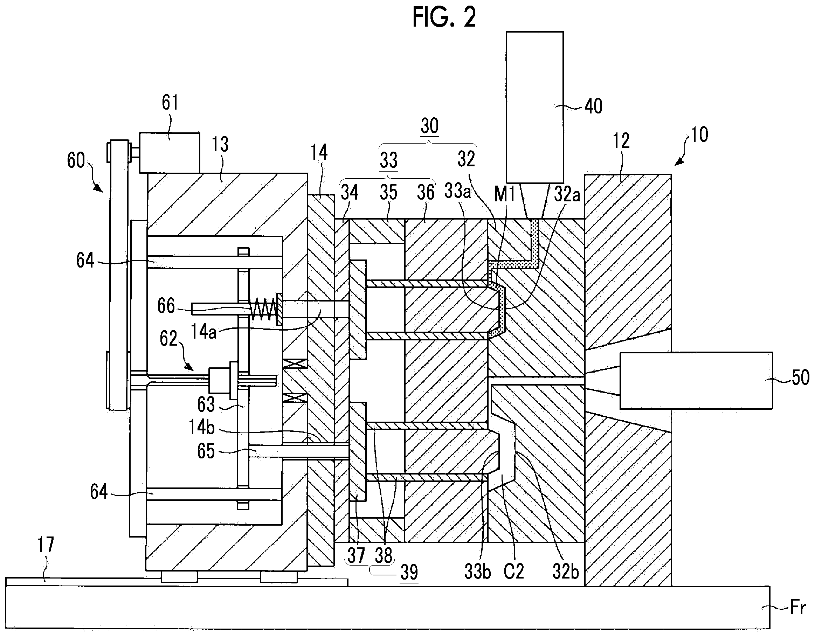

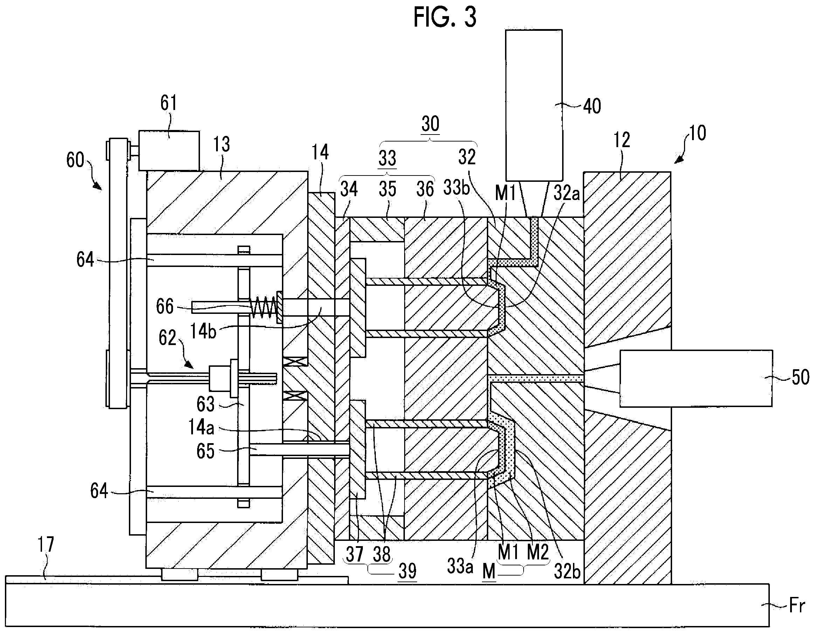

Fig. 1 is a diagram showing the state at the time of mold clamping of an injection molding machine according to an embodiment. Fig. 2 is a diagram showing a state where a cavity for primary molding has been filled with a molding material from a first injection unit in Fig. 1. Fig. 3 is a diagram showing a state where a cavity for secondary molding has been filled with a molding material from a second injection unit in Fig. 2 after the rotation of a turntable in Fig. 2.

As shown in Figs. 1 to 3, the injection molding machine has a frame Fr, a mold clamping unit 10, a first injection unit 40, a second injection unit 50, and an ejector unit 60. In the following description, a direction of movement (a rightward direction in the drawings) of a movable platen 13 when performing mold closing will be described as being forward and a direction of movement (a leftward direction in the drawings) of the movable platen 13 when performing mold opening will be described as being backward.

The mold clamping unit 10 performs mold closing, mold clamping, and mold opening of a mold unit 30 under the control by a controller. The mold clamping unit 10 is a horizontal type in which a mold opening and closing direction is a horizontal direction. The mold clamping unit 10 has a stationary platen 12, the movable platen 13, a turntable 14, and the like. The stationary platen 12 is fixed to the frame Fr. A stationary mold 32 is mounted on the surface facing the movable platen 13 in the stationary platen 12. On the other hand, the movable platen 13 is made so as to be able to move along a guide (for example, a guide rail) 17 which is laid on the frame Fr, and is made so as to be able to advance and retract with respect to the stationary platen 12. A movable mold 33 is mounted on the surface facing the stationary platen 12 in the movable platen 13 through the turntable 14. The mold unit 30 is configured of the stationary mold 32 and the movable mold 33.

The movable platen 13 advances and retracts with respect to the stationary platen 12, whereby the mold closing, the mold clamping, and the mold opening are performed. The mold closing is performed by bringing the movable mold 33 into contact with the stationary mold 32 by advancing the movable platen 13. Subsequently, the mold clamping is performed by generating a mold clamping force by further advancing the movable platen 13. Cavities C1 and C2 are formed between the movable mold 33 and the stationary mold 32 at the time of the mold clamping, and each of the cavities C1 and C2 is filled with a liquid molding material. The filled molding material is solidified, whereby a molding product is obtained. Thereafter, the mold opening is performed by separating the movable mold 33 from the stationary mold 32 by retracting the movable platen 13.

In order to integrally mold different types of molding materials (for example, molding materials of two colors), the mold unit 30 forms the cavity for primary molding C1 and the cavity for secondary molding C2 at the time of the mold clamping. A pair of projection molds (core molds) 33a and 33b having the same shape is formed at the movable mold 33, and a recessed mold (a cavity mold) for primary molding 32a and a recessed mold for secondary molding 32b are formed in the stationary mold 32. The movable mold 33 is made so as to be rotatable together with the turntable 14. If the turntable 14 rotates by 180° after the mold opening, the combination of the projection molds 33a and 33b and the recessed molds 32a and 32b which face each other is changed.

In Figs. 1 to 3, a plurality of projection molds (core molds) 33a and 33b are formed at the movable mold 33. However, the plurality of projection molds (core molds) 33a and 33b may be divided and mounted on the turntable 14.

The movable mold 33 is configured of a mold mounting plate 34 which is mounted on the turntable 14, a spacer block 35, and a mold plate 36 at which the projection molds 33a and 33b are formed. A space surrounded by the spacer block 35 is formed between the mold mounting plate 34 and the mold plate 36. An ejector plate 37 is accommodated in the space so as to be able to advance and retract. A plurality of ejector plates 37 are disposed corresponding to the plurality of projection molds 33a and 33b.

An ejector pin 38 which protrudes forward is fixed to each of the ejector plates 37. The ejector pins 38 penetrate the mold plate 36. When the cavities C1 and C2 are filled with the molding materials, the tip surfaces of the ejectorpins 38 face the cavities C1 and C2, as shown in Fig. 1. If the ejector plate 37 advances from this state, front end portions of the ejector pins 38 protrude forward from the mold plate 36. A molding product pushing-out member 39 is configured of the ejector plate 37 and the ejector pin 38. The molding product pushing-out member 39 is disposed in the mold unit 30 so as to be able to advance and retract.

In the integral molding of different types of molding materials, first, as shown in Fig. 2, a molding material is supplied from the first injection unit 40 for primary molding to the cavity for primary molding C1 which is formed between the recessed mold for primary molding 32a and the projection mold 33a, and the molding material is cooled and solidified, whereby a primary molding product M1 is obtained. The primary molding product M1 is held in a state of hugging the projection mold 33a by thermal contraction due to cooling. Thereafter, the mold opening is performed, the turntable 14 and the movable mold 33 rotate by 180°, thereby being reversed, and the projection mold 33a holding the primary molding product M1 and the recessed mold for secondary molding 32b face each other. In this state, the mold closing and the mold clamping are performed.

Subsequently, as shown in Fig. 3, a molding material is supplied from the second injection unit 50 for secondary molding to the cavity for secondary molding C2 which is formed between the recessed mold for secondary molding 32b and the projection mold 33a holding the primary molding product M1, and the molding material is cooled and solidified, whereby a secondary molding product M2 integrated with the primary molding product M1 is obtained. A finished product (a molding product) M in which the primary molding product M1 and the secondary molding product M2 are integrated with each other is held in a state of hugging the projection mold 33a.

At this time, as shown in Fig. 3, a molding material is supplied from the first injection unit 40 for primary molding to the cavity for primary molding C1 which is formed between the recessed mold for primary molding 32a and the remaining projection mold 33b, and the molding material is cooled and solidified, whereby the primary molding product M1 is obtained. The molding of the primary molding product M1 and the molding of the secondary molding product M2 are performed at substantially the same time.

Finally, the mold opening is performed, the finishedproduct M is pushed out from the movable mold 33 by the ejector pin 38 capable of protruding from the movable mold 33.

In Figs. 1 to 3, the first injection unit 40 is for primary molding and the second injection unit 50 is for secondary molding. However, a configuration is also acceptable in which the first injection unit 40 is for secondary molding and the second injection unit 50 is for primary molding.

The ejector unit 60 is used for the pushing-out of the molding product from the mold unit 30. The ejector unit 60 has an ejector motor 61, a motion conversion mechanism 62, a movable member 63, an ejector rod 65, and a reaction force applying member 66.

The ejector motor 61 is mounted on the movable platen 13. The rotation motion of the ejector motor 61 is transmitted to the motion conversion mechanism 62 through a belt, a pulley, or the like. However, the rotation motion of the ejector motor 61 may be directly transmitted to the motion conversion mechanism 62.

The motion conversion mechanism 62 converts the rotation motion of the ejector motor 61 into the linear motion of the movable member 63. The motion conversion mechanism 62 includes, for example, a screw shaft and a screw nut which is screwed to the screw shaft. Balls or rollers may be interposed between the screw shaft and the screw nut.

The motion conversion mechanism 62 applies a thrust force to the movable member 63. In Figs. 1 to 3, the number of motion conversion mechanisms 62 is one. However, the number of motion conversion mechanisms 62 may be plural. The center position in one or more motion conversion mechanisms 62 when viewed in a front-back direction becomes the action center position of the thrust force in the movable member 63.

Instead of the ejector motor 61 and the motion conversion mechanism 62, a fluid pressure cylinder such as a hydraulic cylinder or a pneumatic cylinder may be used. The center position in one or more fluidpressure cylinders when viewed in a front-back direction becomes the action center position of the thrust force in the movable member 63.

The movable member 63 is made so as to be able to advance and retract along a guide rod 64 which is fixed to the movable platen 13. A rear end portion of the ejector rod 65 is mounted on the movable member 63. The movable member 63 advances the ejector rod 65 by pushing the ejector rod 65 from the rear.

The ejector rod 65 advances the molding product pushing-out member 39 by pushing the molding product pushing-out member 39 from the rear. As a result, the ejector pin 38 protrudes forward from the movable mold 33, thereby separating the finished product M from the movable mold 33. Thereafter, if the ejector rod 65 retracts, the ejector plate 37 retracts, and thus the tip surface of the ejector pin 38 returns to the same level as the parting surface of the movable mold 33. After the ejector rod 65 further retracts and is drawn out from a through-hole 14b of the turntable 14, the turntable 14 rotates by 180°. Thereafter, the ejector rod 65 is inserted into another through-hole 14a of the turntable 14 again. The plurality of through-holes 14a and 14b are disposed symmetrically with the center of rotation of the turntable 14 as the center.

In order to shorten a waiting time from the start of a forward movement of the ejector rod 65 to the start of a forward movement of the ejector plate 37, the ejector rod 65 may be divided into a plurality of split rods in the front-back direction. The split rod on the front side is disposed in the through-hole 14a or 14b of the turntable 14 so as to be able to advance and retract and rotates together with the turntable 14. The split rod on the back side is disposed in a through-hole of the movable platen 13 so as to be able to advance and retract and does not rotate together with the turntable 14.

Incidentally, the ejector rod 65 is pushed from the rear by the movable member 63, thereby being advanced against the adhesion force between the movable mold 33 and the finished product M. At this time, the ejector rod 65 applies a reaction force to the movable member 63. The action center position of the reaction force is deviated from the action center position of the thrust force when viewed in the front-back direction.

Therefore, the ejector unit 60 has the reaction force applying member 66 separately from the ejector rod 65. The reaction force applying member 66 applies a reaction force to the movable member 63 at a different position from the ejector rod 65 when viewed in the front-back direction, at the time of the forward movement of the movable member 63. In this way, at the time of the pushing-out of the molding product, the collapse of the balance of the movable member 63 can be suppressed. The reaction force applying member 66 does not push the molding product pushing-out member 39 unlike the ejector rod 65.

For example, the reaction force applying member 66 includes an elastic member which is disposed at a different position from the ejector rod 65 when viewed in the front-back direction, and applies a reaction force to the movable member 63 by the elastic restoring force of the elastic member at the time of the forward movement of the movable member 63. As the elastic member, for example, a spring is used. The spring applies a reaction force to the movable member 63 by contracting at the time of the forward movement of the movable member 63. However, the spring may apply a reaction force to the movable member 63 by extending at the time of the forward movement of the movable member 63.

In Figs. 1 to 3, as the reaction force applying member 66, a spring is used. However, a damper or the like may be used. The damper applies a reaction force to the movable member 63 by using the resistance of a fluid. The damper has a cylinder which accommodates a fluid therein, and a piston which is disposed in the cylinder so as to be able to advance and retract. The piston partitions the inside of the cylinder into a front chamber and a rear chamber and has an orifice which makes the front chamber and the rear chamber communicate with each other. The piston is connected to the movable member 63 through a piston rod. The piston advances according to the forward movement of the movable member 63, whereby the fluid passes through the orifice toward the rear chamber from the front chamber, and resistance which is generated at that time applies a reaction force to the movable member 63.

At the time of the forward movement of the movable member 63, in the movable member 63, the action center position of the reaction force from the reaction force applying member 66 and the action center position of the reaction force from the ejector rod 65 may be disposed symmetrically with the action center position of the thrust force as the center. In this way, at the time of the pushing-out of the molding product, the collapse of the balance of the movable member 63 can be further suppressed.

The embodiment and the like of the injection molding machine has been described above. However, the present invention is not limited to the above-described embodiment and the like, and various modifications or improvements can be made within the scope of the concept of the present invention stated in the appended claims.

For example, the mold clamping unit 10 of the above-described embodiment is a horizontal type in which the mold opening and closing direction is the horizontal direction, and the turntable 14 is rotatably supported on the movable platen 13. However, the present invention is not limited thereto. For example, the mold clamping unit may be a vertical type in which the mold opening and closing direction is an up-and-down direction, and the turntable may be rotatably supported on the stationary platen. In this case, a configuration may be made such that the stationary mold is mounted on the turntable and the projection molds are formed at the stationary mold. The primary molding product is held in a state of hugging the projection mold.

Further, the mold clamping unit 10 of the above-described embodiment has the turntable 14 in order to change the positions of the plurality of projection molds 33a and 33b. However, the mold clamping unit 10 may not have the turntable 14. A configuration may be made such that the movable mold 33 includes only the projection mold on one side out of the plurality of projection molds 33a and 33b and the projection mold on one side slides between a position where it forms the cavity for primary molding C1 and a position where it forms the cavity for secondary molding C2.

Further, the first injection unit 40 of the above-described embodiment is a vertical type in which the axial direction of a cylinder is the up-and-down direction. However, the first injection unit 40 may be a horizontal type in which the axial direction of a cylinder is the horizontal direction. The axial direction of the cylinder is not particularly limited and may be, for example, a direction oblique to the up-and-down direction or the horizontal direction.

Similarly, the second injection unit 50 of the above-described embodiment is a horizontal type in which the axial direction of a cylinder is the horizontal direction. However, the second injection unit 50 may be a vertical type in which the axial direction of a cylinder is the up-and-down direction. The axial direction of the cylinder is not particularly limited and may be, for example, a direction oblique to the up-and-down direction or the horizontal direction.

Further, in Figs. 1 to 3, the cavities C1 and C2 are arranged in the up-and-down direction. However, the cavities C1 and C2 may be arranged in the horizontal direction (a vertical direction to the plane of the drawing). In a case where the cavities C1 and C2 are arranged in the horizontal direction, a plurality of transverse injection units may be used.

Further, the ejector unit 60 of the above-described embodiment is used for the pushing-out of the finished product M with different types of molding materials overlaid on each other. However, the ejector unit 60 may be used for the pushing-out of a molding product which is molded from a single molding material. If the action center position of the reaction force from the ejector rod 65 and the action center position of the thrust force are deviated from each other in the movable member 63, the effect of the present invention is obtained.

### Brief Description of the Reference Symbols

10: mold clamping unit
12: stationary platen
13: movable platen
14: turntable
30: mold unit
32: stationary mold
32a: recessed mold for primary molding
32b: recessed mold for secondary molding
33: movable mold
33a, 33b: projection mold
37: ejector plate
38: ejector pin
39: molding product pushing-out member
40: first injection unit
50: second injection unit
60: ejector unit
61: ejector motor
62: motion conversion mechanism
63: movable member
65: ejector rod
66: reaction force applying member

## Claims

1. An injection molding machine comprising:
an ejector rod (65) which advances a molding product pushing-out member (39) which is disposed in a mold unit (30) so as to be able to advance and retract, by pushing the molding product pushing-out member (39) from the rear;
a movable member (63) which advances the ejector rod (65) by pushing the ejector rod (65) from the rear;
**characterized by**
the action center position of the reaction force from the ejector rod (65) and the action center position of the thrust force being deviated from each other in the movable member (63) when viewed in the front-back direction, and
a reaction force applying member (66) which applies a reaction force to the movable member (63) at a different position from the ejector rod (65) when viewed in a front-back direction, at the time of a forward movement of the movable member (63).

2. The injection molding machine according to Claim 1, wherein the reaction force applying member (66) includes an elastic member which is disposed at a different position from the ejector rod (65) when viewed in the front-back direction, and applies a reaction force to the movable member (63) by an elastic restoring force of the elastic member at the time of the forward movement of the movable member (63).

## Patentansprüche

1. Spritzgießmaschine, umfassend:
eine Auswerferstange (65), die ein Bauteil (39) zum Ausstoßen eines Spritzgießerzeugnisses, welches in einer Formeinheit (30) so angeordnet ist, dass es sich nach vorn und nach hinten bewegen kann, nach vorn bewegt, indem sie das Bauteil (39) zum Ausstoßen eines Spritzgießerzeugnisses von hinten schiebt,
ein bewegliches Bauteil (63), das die Auswerferstange (65) nach vorn bewegt, indem es die Auswerferstange (65) von hinten schiebt,
**dadurch gekennzeichnet, dass**
die Position des Wirkmittelpunktes der Reaktionskraft von der Auswerferstange (65) und die Position des Wirkmittelpunktes der Schubkraft in dem beweglichen Bauteil (63) in der Richtung nach vorn und nach hinten betrachtet von einander abweichen, und durch
ein Bauteil (66) zum Aufbringen einer Reaktionskraft, das auf das bewegliche Bauteil (63) zum Zeitpunkt der Vorwärtsbewegung des beweglichen Bauteils (63) in der Richtung nach vorn und nach hinten betrachtet eine Reaktionskraft an einer von der Auswerferstange (65) verschiedenen Position aufbringt.

2. Spritzgießmaschine nach Anspruch 1,
wobei das Bauteil (66) zum Aufbringen einer Reaktionskraft ein elastisches Bauteil umfasst, das in der Richtung nach vorn und nach hinten betrachtet an einer von der Auswerferstange (65) verschiedenen Position angeordnet ist und auf das bewegliche Bauteil (63) zum Zeitpunkt der Vorwärtsbewegung des beweglichen Bauteils (63) eine Reaktionskraft durch eine elastische Rückstellkraft des elastischen Bauteils aufbringt.

## Revendications

1. Machine de moulage par injection comprenant :
une tige d'injecteur (65) qui fait avancer un élément de poussée de produit de moulage (39) qui est disposé dans une unité de moule (30) pour pouvoir avancer et se rétracter, en poussant l'élément de poussée de produit de moulage (39) depuis l'arrière ;
un élément mobile (63) qui fait avancer la tige d'injecteur (65) en poussant la tige d'injecteur (65) depuis l'arrière ;
**caractérisée par** :
une position centrale d'action de la force de réaction de la tige d'éjecteur (65) et la position centrale d'action de la force de poussée étant déviées l'une de l'autre dans l'élément mobile (63), lorsqu'il est observé dans une direction avant - arrière, et
un élément d'application de force de réaction (66) qui applique une force de réaction sur l'élément mobile (63) dans une position différente de la tige d'éjecteur (65) lorsqu'elle est observée dans une direction avant - arrière, au moment d'un mouvement vers l'avant de l'élément mobile (63).

2. Machine de moulage par injection selon la revendication 1, dans laquelle l'élément d'application de force de réaction (66) comprend un élément élastique qui est disposé dans une position différente de la tige d'éjecteur (65) lorsqu'elle est observée dans la direction avant - arrière, et applique une force de réaction sur l'élément mobile (63) par une force de rappel élastique de l'élément élastique au moment du mouvement vers l'avant de l'élément mobile (63).
